# EUROPEAN PATENT SPECIFICATION

(11) **EP 1 934 272 B1**
(45) Date of publication and mention of the grant of the patent: **28.11.2012**
(21) Application number: 06799745.2
(22) Date of filing: 10.10.2006
(51) Int. Cl.: C08G 18/30, C08G 18/10, C08G 18/44

(54) **POLYURETHANE ELASTOMER**
POLYURETHANELASTOMER
ÉLASTOMÈRE POLYURÉTHANE

(30) Priority: 14.10.2005 SE 0502284
(43) Date of publication of application: 25.06.2008
(73) Proprietor: Perstorp Specialty Chemicals AB, 284 80 Perstorp (SE)
(72) Inventor: FAHLÉN, Jesper, 26365 Viken (SE); MIDELF, Birger, 262 62 Ängelholm (SE); MAGNUSSON, Anders, 28020 Bjärnum (SE); SÖRENSEN, Kent, 284 35 Perstorp (SE)
(74) Representative: HOFFMANN EITLE
(86) International application number: PCT/SE2006/001145
(87) International publication number: WO 2007/043945

(56) References cited:
- WO-A1-2006/101433
- US-A- 5 001 208
- US-A- 5 001 208
- US-A- 5 284 928
- US-A- 5 993 972
- US-A1- 2002 009 599
- US-A1- 2004 131 863

## Description

The present invention relates to a polyurethane elastomer obtained by reacting at the least a minimum of three basic compounds, said compounds being a di, tri or polyisocyanate, a polycarbonate diol of a 2-alkyl-1,3-propanediol, a 2,2-dialkyl-1,3-propanediol, an alkoxylated 2-alkyl-1,3-propanediol and/or an alkoxylated 2,2-dialkyl-1,3-propanediol, and a di, tri or polyalcohol.

The properties of polyurethane elastomers are primarily determined by the chemical composition although the properties also depend on the processing methods used for production. Variation of the basic starting materials yields elastomeric products which to a large extent are characterised by a segmented, hard and soft, block structure formed by the primary chain. The hard segments are formed by the reaction of a di, tri or polyisocyanate with a di, tri or polyhydric compound. The di, tri or polyhydric compounds used in polyurethane elastomers today are mainly polyester and polyether based. The advantages with polyester based over polyethers based are structural strength, oil, solvent and oxygen resistance and the advantages with polyether based are hydrolytic resistance and low temperature flexibility. The melting temperature of the hard segment and the amount of this segment determines the dimensional thermal stability of a polyurethane elastomer. Interchain interactions (hydrogen bonds mostly) of the hard segments contribute to the high tensile strength, elongation, tear strength and set values obtained. The soft segments result from a long chain di, tri or polyalcohol and the mobility of these segments are responsible for the reversible elastomeric properties. The low temperature flexibility, solvent and UV resistance are largely controlled by the long flexible soft segments in the polyurethane elastomer. Various types of di, tri and polyalcohols have been used and/or evaluated in order to tailor the properties of elastomers. Said di, tri and polyalcohols have molecular weights usually in the range of 600-2500. Di, tri or polyalcohols typically used for polyurethane elastomers have a linear structure and two reactive hydroxyl groups. The morphology (secondary and tertiary structures) of a polyurethane elastomer is dependent on the length and chemical structure of said segments. The exceptional properties of polyurethane elastomers are due to the two or polyphase structure.

There is a pronounced need for speciality polyhydric compounds, such as polycarbonate and polycaprolactone diols, triols and polyols with, compared to polyester diols, triols and polyols, improved UV, chemical, hydrolytic, oxygen and thermal resistance, but with retained mechanical properties. Polycarbonate diols, typically polyester polycarbonate diols, have been shown to have excellent UV, chemical, hydrolytic and oxygen resistance with mechanical properties comparable to those obtained with polyester diols. Polyester polycarbonate diols are in polyurethane elastomers used to a larger extent in areas wherein produced articles are used in applications wherein hydrolytic stability and resistance to micro-organisms are crucial, such as in outdoor tubes and pipes, sport and leisure applications, rollers for printers and paper machines.

Polycarbonate diols and polyurethanes prepared using polycarbonate diols are disclosed in for instance
- US 5,656,713 teaching thermoformable polyurethanes prepared by the reaction of an aliphatic or cycloaliphatic polyisocyanate, a polyester, polycarbonate and/or polyester carbonate diol having a molecular weight of 2000-5000 and one or more diols having a molecular weight of 90-530,
- EP 0 321 288 teaching a polyurethane-urea spandex having soft segments derived from poly(pentane-1,5-carbonate)diol, poly(hexane-1,6-carbonate)diol, copolymers thereof or mixtures thereof, and
- US 4,463,141 teaching polyether carbonate diols obtained from poly(tetramethylene ether)glycol and a dialkyl carbonate, which diols are useful in preparing polyurethane,

The present invention quite unexpectedly provides a polyurethane elastomer with improved properties over prior art elastomers. The polyurethane elastomer of the present invention is obtained by reacting at the least a di, tri or polyisocyanate, a polycarbonate diol of a 2,2-dialkyl-1,3-propanediol, an alkoxylated 2,2-dialkyl-1,3-propanediol and/or a polycarbonate diol comprising units from said 1,3-propanediol and a di, tri or polyalcohol. Di, tri and polyalcohol are herein to be understood as linear or branched, aliphatic, cycloaliphatic or aromatic di, tri and polyhydric alcohols and dimers, trimers and polymers comprising units from one or more di, tri or polyhydric alcohols and/or one or more alkylene oxides. Alkyl in said 1,3-propanediols is preferably linear or branched saturated aliphatic alkanyl having 1-8 carbon atoms and alkoxylated is likewise preferably ethoxylated, propoxylated and/or butoxylated having 1-20 alkoxy units.

Said polycarbonate diol is at least one polycarbonate diol of 2-ethyl-2-butyl-1,3-propanediol, or is at least one polycarbonate diol comprising units from said 1,3-propanediol. Said polycarbonate diol has a molecular weight of 500-5000, such as 500-2500 and can suitably be obtained from for example said 1,3-propanediol and a carbon dioxide source, such as dimethyl carbonate, diethyl carbonate and/or urea.

The di, tri or polyisocyanate is in preferred embodiments an aliphatic, cycloaliphatic and/or aromatic di, tri or polyisocyanate, such as hexamethylene diisocyanate 2,4-toluene diisocyanate, 2,6-toluene diisocyanate, tetramethylxylylene diisocyanate, 1,6-hexane diisocyanate, trimethylhexane diisocyanate, 1,12-dodecane diisocyanate, cyclohexane diisocyanate, diphenylmethane diisocyanate, isophorone diisocyanate and/or nonane triisocyanate.

Said di, tri or polyalcohol as defined above is preferably at least one 1,ω-diol, 2-alkyl-1,3-propanediol, 2,2-dialkyl-1,3-propanediol, 2-alkyl-2-hydroxyalkyl-1,3-propanediol and/or 2,2-di(hydroxyalkyl)-1,3-propanediol and/or at least one dimer, trimer or polymer of a said di, tri or polyalcohol and/or a reaction product between at least one alkylene oxide, such as ethylene oxide, propylene oxide, 1,3-butylene oxide, 2,4-butylene oxide, cyclohexene oxide, butadiene monoxide and/or phenylethylene oxide, and at least one 1,ω-diol, 2-alkyl-1,3-propanediol, 2,2-dialkyl-1,3-propanediol, 2-alkyl-2-hydroxyalkyl-1,3-propanediol and/or 2,2-di(hydroxyalkyl)-1,3-propanediol and/or at least one dimer, trimer or polymer of a said di, tri or polyalcohol. The preferred di, tri and polyalcohols can suitably be exemplified by 1,4-butanediol, 1,5-pentanediol, 1,6-hexanediol, 1,6-cyclohexanedimethanol, 5,5-dihydroxymethyl-1,3-dioxane, 2-methyl-1,3-propanediol, 2-methyl-2-ethyl-1,3-propanediol, 2-ethyl-2--butyl-1,3-propanediol, neopentyl glycol, dimethylolpropane, 1,1-dimethylolcyclohexane, glycerol, trimethylolethane, trimethylolpropane, diglycerol, ditrimethylolethane, ditrimethylolpropane, pentaerythritol, dipentaerythritol, anhydroenneaheptitol, sorbitol, mannitol and ethoxylated and/or propoxylated glycerol, trimethylolethane, trimethylolpropane, diglycerol, ditrimethylolethane, ditrimethylolpropane, pentaerythritol, dipentaerythritol, anhydroenneaheptitol, sorbitol and/or mannitol.

In the following, Example 1 refer to preparation of a prepolymer inside the scope of the present invention, which prepolymer is used in Examples 2-4 for preparation of embodiments of the present elastomer. Example 5 refer to preparation of a prepolymer outside the scope of the present invention, which prepolymer is used in Examples 6 and 7 for preparation of reference elastomers. The elastomers obtained in Examples 2-4, 6 and 7 are evaluated in Examples 8-10. Example 11 refers to preparation of a prepolymer inside the scope of the present invention and Examples 12-15 refer to preparation of reference prepolymers outside the scope of the present invention. The prepolymers of Examples 11-15 are used in Example 16 for preparation of embodiment and reference elastomers, which elastomers are evaluated in Examples 17, 18 and 19. The result of evaluations of embodiment and reference elastomers are given in Tables 1-6.

### Example 1

287.30 g of a 2-butyl-2-ethyl-1,3-propanediol polycarbonate diol having a molecular weight of 1000 (Oxymer™ B112, Perstorp Specialty Chemicals AB, Sweden) was charged in a reaction vessel equipped with a thermometer, an agitator, a vacuum device, a heating device and a cooling device, and under stirring heated to 70°C. The polycarbonate diol was degassed for 10 min. and 112.70 g of isophorone diisocyanate was drop wise during 1 hour charged to the reaction vessel. Initially a few drops of dibutyltin dilaurate were as catalyst added. The reaction temperature was after said one hour raised to 120°C and the reaction was allowed to continue for a further 2 hours, whereafter obtained prepolymer was degassed, cooled and recovered.

A colourless waxy substance having the following characteristics was obtained:

| | |
|---|---|
| Glass transition temperature (Tg), °C | 0 |
| Molecular weight (Mn) | 1603 |
| Isocyanate content, % | 5.33 |

### Example 2

30 g of the prepolymer obtained in Example 1 was heated to 120°C and degassed to remove all air. A stoichiometric amount of 1,4-butandiol was now added to the prepolymer for reaction with available free isocyanate groups. Obtained polyurethane elastomer was subsequently cured at 122°C for 24 hours.

### Example 3

30 g of the prepolymer obtained in Example 1 was heated to 120°C and degassed to remove all air. A stoichiometric amount of a mixture of 1,4-butandiol and trimethylolpropane (1:1 by weight) was now added to the prepolymer for reaction with available free isocyanate groups. Obtained polyurethane elastomer was subsequently cured at 122°C for 24 hours.

### Example 4

30 g of the prepolymer obtained in Example 1 was heated to 120°C and degassed to remove all air. A stoichiometric amount of an polyethoxylated trimethylolpropane, having an average of 3 ethylene oxide units per molecule (Polyol 3610™, Perstorp Specialty Chemicals AB, Sweden), was now added to the prepolymer for reaction with available free isocyanate groups. Obtained polyurethane elastomer was subsequently cured at 122°C for 24 hours.

### Example 5 (Reference)

Example 1 was repeated with the difference that ethylene glycol adipate, having a molecular weight of 1000, was used instead of said 2-butyl-2-ethyl-1,3-propanediol polycarbonate diol.

### Example 6 (Reference)

Examples 2 was repeated with the difference that the prepolymer of Example 5 was used instead of the prepolymer of Example 1.

### Example 7 (Reference)

Examples 3 was repeated with the difference that the prepolymer of Example 5 was used instead of the prepolymer of Example 1.

### Example 8

Chemical resistance of the elastomers prepared in Examples 2-4 and 5-7 (Reference) were evaluated with the "spot test" or "watch glass" method. Chemicals used were acetone, hydraulic pump oil, 50% aq. sulphuric acid and 50% aq. sodium hydroxide. Damages such as swelling, discolouration and/or cracking, were visually evaluated after 12, 24, 36, 48 and 60 hours and graded on a scale 0-3, wherein 0 = no visible damages, 1 = slightly visible damages, 2 = distinctly visible damages and 3 = heavy damages. The result is given i Table 1 below.

### Example 9

Shore durometer hardness test were performed on the elastomers prepared in Examples 2-4 and 5-7 (Reference). Elastomers according to the present invention (Examples 2-4) were all harder than corresponding polyester based elastomers (references). The shore A values are given in Table 2 below.

### Example 10

Thermal properties, glass transition temperature (Tg), of the elastomers prepared in Examples 2-4 and 5-7 (Reference) were measured with DSC at 10°C/min. Elastomers according to the present invention (Examples 2-4) all exhibited a higher Tg than corresponding polyester based elastomers (references). The Tg values are given in Table 3 below.

### Example 11

181.99 g of 1,6-hexamethylene diisocyanate together with a few drops of dibutyltin dilaurate as catalyst was charged in a reaction vessel equipped with a thermometer, an agitator, a vacuum device, a heating device, a cooling device and nitrogen purge and heated to 60°C. The temperature was thereafter raised to 70°C and a drop-wise charging of 542.01 g 2-butyl-2-ethyl-1,3-propandiol polycarbonate having a molecular weight of 1000 (Oxymer™ B 112, Perstorp Specialty Chemicals AB, Sweden) commenced. The reaction temperature was, after one hour when all polycarbonate diol was charged, raised to 80°C and the reaction was allowed to continue for a further 2 hours. Obtained prepolymer was finally degassed, recovered and cooled.

A colourless waxy substance having the following characteristics was obtained:

| | |
|---|---|
| Glass transition temperature (Tg), °C | -22 |
| Molecular weight (Mn) | 2200 |
| Isocyanate content, % | 5.0 |

### Example 12 (Reference)

Example 11 was repeated with the difference that 1,6-hexanediol polycarbonate (Desmophen™ XP 2586, Bayer MaterialScience, Germany) was used instead of said 2-butyl-2-ethyl-1,3-propanediol polycarbonate diol.

### Example 13 (Reference)

Example 11 was repeated with the difference that an adipic acid-ethylene glycol copolymer (Fomrez™ 22-112, Crompton Uniroyal Chemical, Great Britain) was used instead of said 2-butyl-2-ethyl-1,3-propanediol polycarbonate diol.

### Example 14 (Reference)

Example 11 was repeated with the difference that a poly(tetramethylene ether) glycol (Terathane™ 1000, Invista, USA) was used instead of said 2-butyl-2-ethyl-1,3-propanediol polycarbonate diol.

### Example 15 (Reference)

Example 11 was repeated with the difference that a linear polyester caprolactone (Capa™ 2101A, Solvay, Belgium) was used instead of said 2-butyl-2-ethyl-1,3-propanediol polycarbonate diol.

### Example 16

180 g of the prepolymer obtained in Example 11 was heated to 90°C and degassed to remove all air. A stoichiometric amount of an 1,4-butanediol was now added to the prepolymer for reaction with available free isocyanate groups. The reaction mixture was degassed a second time before poured into a mould. Obtained polyurethane elastomer was subsequently cured at 120°C for 24 hours. The moulded product was thereafter removed from the mould and post cured for one week at 23°C and 50 % relative humidity.

Reference materials were in the same way prepared from the prepolymers obtained in reference Examples 12-15.

Obtained polyurethane elastomers had following measurement: 245x160x4 mm.

### Example 17

Three different samples, from each elastomer obtained in Example 16, were cut out (Cutting Die Type ISO 37-2) for tensile testing. The hardness of the samples was measured with a Shore A Durometer and the result is given in Table 4 below.

### Example 18

Three samples, from each elastomer obtained in Example 16, were cut out (Cutting Die Type ISO 37-2) for hydrolysis resistance testing. The specimens were aged for 14 days at 70°C and 95 % relative humidity in a climate chamber. The hardness of the samples was measured with a Shore A Durometer after the testing and compared to the original values as given in Table 4.

The result in percent of said original values are given in Table 5 below.

### Example 19

Three samples, from each elastomer obtained in Example 16, were cut out (Cutting Die Type ISO 37-2) for weather resistance testing. The weather resistance was simulated with accelerated QUV testing according to the following scheme: QUV-A: 4h UV at 60°C, 4h condensation at 50°C, total run time 1000 hours. The retained mechanical properties were determined with a shore A Durometer and tensile testing machine and compared to the original values as given in Table 4.

None of the samples cut out from the elastomer obtained in Example 14 Ref. withstood the QUV and could accordingly not be subsequently tested. Only sample cut out from the elastomer obtained in Example 15 and only two sample cut out from the elastomer obtained in Example 13 Ref. could be tested after the weathering.

The result in percent of said original values are given in Table 6 below.

**Table 1**

| **Elastomer acc. Ex. 2** | **Exposure (hours)** | | | | |
|---|---|---|---|---|---|
| | **12** | **24** | **36** | **48** | **60** |
| Acetone | 1 | 3 | 3 | 3 | 3 |
| Hydraulic pump oil | 0 | 0 | 0 | 0 | 0 |
| Sulphuric acid 50% | 0 | 0 | 0 | 1 | 1 |
| Sodium hydroxide 50% | 0 | 0 | 0 | 0 | 0 |

| **Elastomer acc. Ex. 3** | **Exposure (hours)** | | | | |
|---|---|---|---|---|---|
| | **12** | **24** | **36** | **48** | **60** |
| Acetone | 2 | 3 | 3 | 3 | 3 |
| Hydraulic pump oil | 0 | 0 | 0 | 0 | 0 |
| Sulphuric acid 50% | 0 | 0 | 0 | 1 | 1 |
| Sodium hydroxide 50% | 0 | 0 | 0 | 0 | 0 |

| **Elastomer acc. Ex. 4** | **Exposure (hours)** | | | | |
|---|---|---|---|---|---|
| | **12** | **24** | **36** | **48** | **60** |
| Acetone | 0 | 2 | 3 | 3 | 3 |
| Hydraulic pump oil | 0 | 0 | 0 | 0 | 0 |
| Sulphuric acid 50% | 0 | 0 | 0 | 0 | 0 |
| Sodium hydroxide 50% | 0 | 0 | 0 | 0 | 0 |

| **Elastomer acc. Ex. 5 (Ref.)** | **Exposure (hours)** | | | | |
|---|---|---|---|---|---|
| | **12** | **24** | **36** | **48** | **60** |
| Acetone | 1 | 3 | 3 | 3 | 3 |
| Hydraulic pump oil | 0 | 0 | 0 | 0 | 0 |
| Sulphuric acid 50% | 1 | 2 | 3 | 3 | 3 |
| Sodium hydroxide 50% | 0 | 0 | 1 | 2 | 2 |

| **Elastomer acc. Ex. 6 (Ref.)** | **Exposure (hours)** | | | | |
|---|---|---|---|---|---|
| | **12** | **24** | **36** | **48** | **60** |
| Acetone | 1 | 3 | 3 | 3 | 3 |
| Hydraulic pump oil | 0 | 0 | 0 | 0 | 0 |
| Sulphuric acid 50% | 1 | 2 | 3 | 3 | 3 |
| Sodium hydroxide 50% | 0 | 0 | 2 | 2 | 2 |

| **Elastomer acc. Ex. 7 (Ref.)** | **Exposure (hours)** | | | | |
|---|---|---|---|---|---|
| | **12** | **24** | **36** | **48** | **60** |
| Acetone | 1 | 3 | 3 | 3 | 3 |
| Hydraulic pump oil | 0 | 0 | 0 | 0 | 0 |
| Sulphuric acid 50% | 1 | 2 | 3 | 3 | 3 |
| Sodium hydroxide 50% | 0 | 0 | 2 | 2 | 3 |

**Table 2**

| **Sample** | **Shore A** |
|---|---|
| Elastomer acc. to Example 2 | 56 ± 9 |
| Elastomer acc. to Example 3 | 91 ± 3 |
| Elastomer acc. to Example 4 | 91 ± 5 |
| Elastomer acc. to Example 5 (Reference) | 46 ± 6 |
| Elastomer acc. to Example 6 (Reference) | 61 ± 1 |
| Elastomer acc. to Example 7 (Reference) | 62 ± 5 |

**Table 3**

| **Sample** | **Tg, °C** |
|---|---|
| Elastomer acc. to Example 2 | 14 |
| Elastomer acc. to Example 3 | 16 |
| Elastomer acc. to Example 4 | 15 |
| Elastomer acc. to Example 5 (Reference) | -20 |
| Elastomer acc. to Example 6 (Reference) | -18 |
| Elastomer acc. to Example 7 (Reference) | -23 |

**Table 4**

| **Elastomer according to Example** | Hardness shore A | E-modulus MPa | Stress at 10% strain, % | Max stress MPa | Elongation % |
|---|---|---|---|---|---|
| 11 | 52 ± 4 | 1.5 ± 0.1 | 0.1 ± 0.0 | 3.3 ± 0.8 | 600 ± 60 |
| 12 (Ref.) | 91 ± 1 | 38 ± 2 | 2.6 ± 0.2 | 27 ± 2 | 800 ± 40 |
| 13 (Ref.) | 93 ± 1 | 43 ± 1 | 2.3 ± 0.0 | 27 ± 7 | 1300 ± 300 |
| 14 (Ref.) | 92 ± 1 | 46 ± 1 | 2.7 ± 0.1 | 14 ± 2 | 800 ± 150 |
| 15 (Ref.) | 94 ± 0 | 49 ± 1 | 2.8 ± 0.1 | 16 ± 1 | 800 ± 90 |

**Table 5**

| **Elastomer according to Example** | Hardness % | E-modulus % | Max stress % | Elongation % | Weight % |
|---|---|---|---|---|---|
| 11 | -8.8 | 5.8 | -33 | 29 | -5.4 |
| 12 (Ref.) | -5.9 | 5 | 29 | 33 | 0.8 |
| 13 (Ref.) | -1.5 | -42 | -80 | -95 | 2.3 |
| 14 (Ref.) | -1.3 | -25 | 12 | 20 | 1.2 |
| 15 (Ref.) | -1.6 | -23 | -18 | 5 | 1.4 |

**Table 6**

| **Elastomer according to Example** | Hardness % | E-modulus % | Max stress % | Elongation % | Weight % |
|---|---|---|---|---|---|
| 11 | -16.9 | 7.5 | -75.6 | -74.3 | -7.4 |
| 12 (Ref.) | -5.6 | -37.0 | -78.0 | -70.0 | -0.5 |
| 13 (Ref.) | -10.0 | -65.0 | -94.0 | -98.0 | -0.3 |
| 14 (Ref.) | --- | --- | --- | --- | --- |
| 15 (Ref.) | -12.0 | -69.0 | -98.0 | -98.0 | -0.1 |

## Claims

1. A polyurethane elastomer obtained by reacting a di, tri or polyisocyanate, a polycarbonate diol and a di, tri or polyalcohol **characterised in, that** said polycarbonate diol has a molecular weight of 500-5000 g/mol and is obtained from 2-butyl-2-ethyl-1,3-propanediol or an alkoxylated species thereof and a carbon dioxide source.

2. A polyurethane elastomer according to Claim 1 **characterised in, that** said polycarbonate diol further comprises units from at least one additional 2-alkyl-1,3-propanediol or 2.2-dialkyl-1,3-propanediol or an alkoxylated species thereof.

3. A polyurethane elastomer according to Claim 2 **characterised in, that** said at least one additional 2-alkyl-1,3-propanediol, 2,2-dialkyl-1,3-propanediol is 2-methyl-1,3-propanediol, 2-methyl-2-othyl-1,3-propanediol or 2,2-dimethyl-1,3--propanediol.

4. A polyurethane elastomer according to any of the Claims 1-3 **characterised in, that** said akoxylated species is an ethoxylated, a propoxylated or a butoxylated species having 1-20 alkoxy units.

5. A polyurethane elastomer according to any of the Claims 1-4 **characterised in, that** said carbon dioxide source is dimethyl carbonate, diethyl carbonate or urea.

6. A polyurethane elastomer according to any of the Claims 1-5 **characterised in, that** said polycarbonate diol has a molecular weight 500-2500 g/mol.

7. A polyurethane elastomer according to any of the Claims 1-6 **characterised in, that** said di, tri or polyisocyanate is an aliphatic, cycloaliphatic or aromatic di, tri or polyisocyanate.

8. A polyurethane elastomer according to any of the Claims 1-7 **characterised in, that** said di, tri or polyisocyanate is hexamethylene diisocyanate, 2,4-toluene diisocyanate, 2,6-toluene diisocyanate, tetramethylxylylene diisocyanate, 1,6-hexane diisocyanate, trimethylhexane diisocyanate, 1,12-dodecane diisocyanate, cyclohexane diisocyanate, diphenylmethane diisocyanate, isophorone diisocyanate or nonane triisocyanate.

9. A polyurethane elastomer according to any of the Claims 1-8 **characterised in, that** said di, tri or polyalcohol is at least one 1,ω-diol, 2-alkyl-1,3-propanediol, 2,2-dialkyl-1,3-propanediol, 2-alkyl-2-hydroxyalkyl-1,3-propanediol or 2,2-dihydroxyalkyl-1,3-propanediol or is at least one dimer, trimer or polymer of a said di, tri or polyalcohol.

10. A polyurethane elastomer according to any of the Claims 1-8 **characterised in, that** said di, tri or polyalcohol is 1,4-butanediol, 1,5-pentanediol, 1,6-hexanediol, 1,6-cyclohexanedimethanol, 5,5-dihydroxymethyl-1,3-dioxane, 2-methyl-1,3--propanediol. 2-methyl-2-ethyl-1.3-propanediol, 2-ethyl-2-butyl-1,3-propanediol, neopentyl glycol, dimethylolpropane, 1,1-dimethylolcyclohexane, glycerol, trimethylolethane, trimethylolpropane, diglycerol, ditrimethylolethane, ditrimethylolpropane, pentaerythritol, dipentaerythritol, anhydroenneaheptitol, sorbitol or mannitol

11. A polyurethane elastomer according to any of the Claims 1-8 **characterised in, that** said di, tri or polyalcohol is a reaction product between at least one alkylene oxide and at least one 1,ω-diol, 2-alkyl-1,3-propanediol, 2,2-dialkyl-1,3-propanediol, 2-alkyl-2-hydroxyalkyl-1,3-propanediol, 2,2-dihydroxyalkyl-1,3-propanediol or a dimer, trimer or polymer of a said di, tri or polyalcohol.

12. A polyurethane elastomer according to Claim 11 **characterised in, that** said alkylene oxide is ethylene oxide, propylene oxide, 1,3-butylene oxide, 2,4-butylene oxide, cyclohexene oxide, butadiene monoxide or phenylethylene oxide.

13. A polyurethane elastomor according to Claim 11 or 12 **characterised i n,** that said di, tri or polyalcohol is an ethoxylated or a propoxylated glycerol, trimethylolethane, trimethylolpropane, diglycerol, ditrimethylolethane, ditrimethylolpropane, pentaerythritol, dipentaerythritol, anhydroenneaheptitol, sorbitol or mannitol.

## Patentansprüche

1. Polyurethanelastomer, erhältlich durch Umsetzen eines Di-, Tri- oder Polyisocyanats, eines Polycarbonatdiols und eines Di-, Tri- oder Polyalkohols, **dadurch gekennzeichnet, dass** das Polycarbonatdiol ein Molekulargewicht von 500 bis 5.000 g/mol hat und aus 2-Butyl-2-ethyl-1,3-propandiol oder einer alkoxylierten Spezies davon und einer Kohlendioxidquelle erhältlich ist.

2. Polyurethanelastomer gemäß Anspruch 1, **dadurch gekennzeichnet, dass** das Polycarbonatdiol weiterhin Einheiten aus mindestens einem weiteren 2-Alkyl-1,3-propandiol oder 2,2-Dialkyl-1,3-propandiol oder einer alkoxylierten Spezies davon umfasst.

3. Polyurethanelastomer gemäß Anspruch 2, **dadurch gekennzeichnet, dass** das mindestens eine weitere 2-Alkyl-1,3-propandiol oder 2,2-Dialkyl-1,3-propandiol 2-Methyl-1,3-propandiol, 2-Methyl-2-ethyl-1,3-propandiol oder 2,2-Dimethyl-1,3-propandiol ist.

4. Polyurethanelastomer gemäß irgendeinem der Ansprüche 1 bis 3, **dadurch gekennzeichnet, dass** die alkoxylierte Spezies eine ethoxylierte, propoxylierte oder butoxylierte Spezies mit 1 bis 20 Alkoxyeinheiten ist.

5. Polyurethanelastomer gemäß irgendeinem der Ansprüche 1 bis 4, **dadurch gekennzeichnet, dass** die Kohlendioxidquelle Dimethylcarbonat, Diethylcarbonat oder Harnstoff ist.

6. Polyurethanelastomer gemäß irgendeinem der Ansprüche 1 bis 5, **dadurch gekennzeichnet, dass** das Polycarbonatdiol ein Molekulargewicht von 500 bis 2.500 g/mol hat.

7. Polyurethanelastomer gemäß irgendeinem der Ansprüche 1 bis 6, **dadurch gekennzeichnet, dass** das Di-, Tri- oder Polyisocyanat ein aliphatisches, cycloaliphatisches oder aromatisches Di-, Tri- oder Polyisocyanat ist.

8. Polyurethanelastomer gemäß irgendeinem der Ansprüche 1 bis 7, **dadurch gekennzeichnet, dass** das Di-, Tri- oder Polyisocyanat Hexamethylendiisocyanat, 2,4-Toluoldiisocyanat, 2,6-Toluoldiisocyanat, Tetramethylxylylendiisocyanat, 1,6-Hexandiisocyanat, Trimethylhexandiisocyanat, 1,12-Dodecandiisocyanat, Cyclohexandiisocyanat, Diphenylmethandiisocyanat, Isophorondiisocyanat oder Nonantriisocyanat ist.

9. Polyurethanelastomer gemäß irgendeinem der Ansprüche 1 bis 8, **dadurch gekennzeichnet, dass** der Di-, Tri- oder Polyalkohol mindestens ein 1,ω-Diol, 2-Alkyl-1,3-propandiol, 2,2-Dialkyl-1,3-propandiol, 2-Alkyl-2-hydroxyalkyl-1,3-propandiol oder 2,2-Dihydroxyalkyl-1,3-propandiol oder mindestens ein Dimer, Trimer oder Polymer des Di-, Tri- oder Polyalkohols ist.

10. Polyurethanelastomer gemäß irgendeinem der Ansprüche 1 bis 8, **dadurch gekennzeichnet, dass** der Di-, Tri- oder Polyalkohol 1,4-Butandiol, 1,5-Pentandiol, 1,6-Hexandiol, 1,6-Cyclohexandimethanol, 5,5-Dihydroxymethyl-1,3-dioxan, 2-Methyl-1,3-propandiol, 2-Methyl-2-ethyl-1,3-propandiol, 2-Ethyl-2-butyl-1,3-propandiol, Neopentylglycol, Dimethylolpropan, 1,1-Dimethylolcyclohexan, Glycerin, Trimethylolethan, Trimethylolpropan, Diglycerol, Ditrimethylolethan, Ditrimethylolpropan, Pentaerythritol, Dipentaerythritol, Anhydroenneaheptitol, Sorbitol oder Mannitol ist.

11. Polyurethanelastomer gemäß irgendeinem der Ansprüche 1 bis 8, **dadurch gekennzeichnet, dass** der Di-, Tri- oder Polyalkohol ein Umsetzungsprodukt zwischen mindestens einem Alkylenoxid und mindestens einem 1,ω-Diol, 2-Alkyl-1,3-propandiol, 2,2-Dialkyl-1,3-propandiol, 2-Alkyl-2-hydroxyalkyl-1,3-propandiol, 2,2-Dihydroxyalkyl-1,3-propandiol oder einem Dimer, Trimer oder Polymer des Di-, Tri- oder Polyalkohols ist.

12. Polyurethanelastomer gemäß Anspruch 11, **dadurch gekennzeichnet, dass** das Alkylenoxid Ethylenoxid, Propylenoxid, 1,3-Butylenoxid, 2,4-Butylenoxid, Cyclohexenoxid, Butadienmonoxid oder Phenylethylenoxid ist.

13. Polyurethanelastomer gemäß Anspruch 11 oder 12, **dadurch gekennzeichnet, dass** der Di-, Tri- oder Polyalkohol ein ethoxyliertes oder propoxyliertes Glycerin, Trimethylolethan, Trimethylolpropan, Diglyerol, Ditrimethylolethan, Ditrimethylolpropan, Pentaerythritol, Dipentaerythritol, Anhydroenneaheptitol, Sorbitol oder Mannitol ist.

## Revendications

1. Élastomère polyuréthane obtenu par réaction d'un di, tri ou polyisocyanate, d'un polycarbonate diol et d'un di, tri ou polyalcool **caractérisé en ce que** ledit polycarbonate diol a un poids moléculaire de 500 à 5 000 g/mole et est obtenu à partir de 2-butyl-2-éthyl-1,3-propanediol ou d'une espèce alcoxylée de celui-ci et d'une source de dioxyde de carbone.

2. Élastomère polyuréthane selon la revendication 1 **caractérisé en ce que** ledit polycarbonate diol comprend en outre des unités provenant d'au moins un 2-alkyl-1,3-propanediol ou un 2,2-dialkyl-1,3-propanediol ou une espèce alcoxylée de ceux-ci additionnel(le).

3. Élastomère polyuréthane selon la revendication 2 **caractérisé en ce que** ledit au moins un 2-alkyl-1,3-propanediol, 2,2-dialkyl-1,3-propanediol additionnel est le 2-méthyl-1,3-propanediol, le 2-méthyl-2-éthyl-1,3-propanediol ou le 2,2-diméthyl-1,3-propanediol.

4. Élastomère polyuréthane selon l'une quelconque des revendications 1 à 3 **caractérisé en ce que** ladite espèce alcoxylée est une espèce éthoxylée, propoxylée ou butoxylée ayant 1 à 20 unités alcoxy.

5. Élastomère polyuréthane selon l'une quelconque des revendications 1 à 4 **caractérisé en ce que** ladite source de dioxyde de carbone est le carbonate de diméthyle, le carbonate de diéthyle ou l'urée.

6. Élastomère polyuréthane selon l'une quelconque des revendications 1 à 5 **caractérisé en ce que** ledit polycarbonate diol a un poids moléculaire de 500 à 2 500 g/mole.

7. Élastomère polyuréthane selon l'une quelconque des revendications 1 à 6 **caractérisé en ce que** ledit di, tri ou polyisocyanate est un di, tri ou polyisocyanate aliphatique, cycloaliphatique ou aromatique.

8. Élastomère polyuréthane selon l'une quelconque des revendications 1 à 7 **caractérisé en ce que** ledit di, tri ou polyisocyanate est le diisocyanate d'hexaméthylène, le diisocyanate de 2,4-toluène, le diisocyanate de 2,6-toluène, le diisocyanate de tétraméthylxylylène, le diisocyanate de 1,6-hexane, le diisocyanate de triméthylhexane, le diisocyanate de 1,12-dodécane, le diisocyanate de cyclohexane, le diisocyanate de diphénylméthane, le diisocyanate d'isophorone ou le triisocyanate de nonane.

9. Élastomère polyuréthane selon l'une quelconque des revendications 1 à 8 **caractérisé en ce que** ledit di, tri ou polyalcool est au moins un 1,ω-diol, 2-alkyl-1,3-propanediol, 2,2-dialkyl-1,3-propanediol, 2-alkyl-2-hydroxyalkyl-1,3-propanediol ou 2,2-dihydroxyalkyl-1,3-propanediol ou bien est au moins un dimère, trimère ou polymère d'un dit di, tri ou polyalcool.

10. Élastomère polyuréthane selon l'une quelconque des revendications 1 à 8 **caractérisé en ce que** ledit di, tri ou polyalcool est le 1,4-butanediol, le 1,5-pentanediol, le 1,6-hexanediol, le 1,6-cyclohexanediméthanol, le 5,5-dihydroxyméthyl-1,3-dioxane, le 2-méthyl-1,3-propanediol, le 2-méthyl-2-éthyl-1,3-propanediol, le 2-éthyl-2-butyl-1,3-propanediol, le néopentyle glycol, le diméthylolpropane, le 1,1-diméthylolcyclohexane, le glycérol, le triméthyloléthane, le triméthylolpropane, le diglycérol, le ditriméthyloléthane, le ditriméthylolpropane, le pentaérythritol, le dipentaérythritol, l'anhydroennéaheptitol, le sorbitol ou le mannitol.

11. Élastomère polyuréthane selon l'une quelconque des revendications 1 à 8 **caractérisé en ce que** ledit di, tri ou polyalcool est un produit de réaction entre au moins un oxyde d'alkylène et au moins un 1,ω-diol, 2-alkyl-1,3-propanediol, 2,2-dialkyl-1,3-propanediol, 2-alkyl-2-hydroxyalkyl-1,3-propanediol, 2,2-dihydroxyalkyl-1,3-propanediol ou un dimère, trimère ou polymère d'un dit di, tri ou polyalcool.

12. Élastomère polyuréthane selon la revendication 11, **caractérisé en ce que** ledit oxyde d'alkylène est un oxyde d'éthylène, un oxyde de propylène, un oxyde de 1,3-butylène, un oxyde de 2,4-butylène, un oxyde de cyclohexène, un monoxyde de butadiène ou un oxyde de phényléthylène.

13. Élastomère polyuréthane selon la revendication 11 ou 12, **caractérisé en ce que** ledit di, tri ou polyalcool est un glycérol, un triméthyloléthane, un triméthylolpropane, un diglycérol, un ditriméthyloléthane, un ditriméthylolpropane, un pentaérythritol, un dipentaérythritol, un anhydroennéaheptitol, un sorbitol ou un mannitol éthoxylé ou propoxylé.
